**Europäisches Patentamt**

**European Patent Office**

**Office européen des brevets**

(19)

(11) Numéro de publication: **0 044 249**

**A1**

# (12) DEMANDE DE BREVET EUROPEEN

(21) Numéro de dépôt: **81401091.4**

(22) Date de dépôt: **07.07.81**

(51) Int. Cl.³: **B 23 Q 1/14**

(30) Priorité: **07.07.80 FR 8015226**

(43) Date de publication de la demande:
**20.01.82 Bulletin 82/3**

(84) Etats contractants désignés:
**AT BE CH DE FR GB IT LI LU NL SE**

(71) Demandeur: **Bertoux, Daniel André**
**9 et 11, rue Henriette Dumuin**
**F-80000 Amiens(FR)**

(72) Inventeur: **Bertoux, Daniel André**
**9 et 11, rue Henriette Dumuin**
**F-80000 Amiens(FR)**

(74) Mandataire: **Bruder, Michel**
**10 rue de la Pépinière**
**F-75008 Paris(FR)**

(54) **Table de découpe avec scie sauteuse incorporée.**

(57) La présente invention concerne une table de découpe avec une scie sauteuse (11) incorporée, pour le découpage de plaques de matériaux divers suivant des formes circulaires ou autres.

Cette table de découpe comprenant un plateau horizontal (1) dans lequel est aménagée une ouverture (3), un curseur mobile (5), dans cette ouverture (3); en regard d'une échelle graduée (4), ce curseur (5) portant un organe définissant le centre de la pièce à découper, et une lame de scie (9) disposée à une extrémité de l'ouverture longitudinale, perpendiculairement à l'axe de cette ouverture et s'étendant verticalement au-dessus du plateau (1), est caractérisée en ce que cette lame de scie (9) fait partie d'une scie sauteuse dont le corps (11) est situé sous le plateau (1) et le bord coupant (9a) de cette lame (9) est décalé en avant par rapport à l'axe de l'ouverture longitudinale (3).

Fig.1

EP 0 044 249 A1

0044249

La présente invention concerne une table de découpe avec une scie sauteuse incorporée, pour le découpage de plaques de matériaux divers suivant des formes circulaires ou autres.

On connaît déjà des tables de découpe qui permettent de découper des pièces circulaires à partir de plaques de matériaux divers. De telles tables de découpe sont décrites, par exemple, dans les brevets US N° 2.827.084 et N° 4.055.102.

La table de découpe décrite dans le brevet N° 2.827.084 comprend un plateau supérieur dans lequel est ménagée une ouverture et un curseur monté à coulissement dans cette ouverture, en regard d'une échelle graduée, ce curseur présentant sur sa face supérieure une pointe destinée à matérialiser le centre de la pièce devant être découpée circulairement. Cette ouverture s'étend perpendiculairement à une lame de scie à ruban et l'axe de l'ouverture passe par le milieu de la lame.

Par ailleurs, le brevet US N° 4.055.102 décrit une table à découpe comportant une scie à ruban et une scie sauteuse, dont les lames s'étendent parallèlement l'une à l'autre pour découper une plaque suivant deux traits de scie parallèles. La scie sauteuse est elle-même montée réglable en position dans une ouverture longitudinale qui s'étend perpendiculairement au plan des deux lames de scie.

Ces tables de découpe connues présentent divers inconvénients et, entre autres, celui de ne pas permettre d'effectuer la découpe d'ouvertures circulaires dans des plaques, du fait que l'on utilise pour la découpe une lame de scie à ruban. Par ailleurs ces tables de découpe ne permettent pas d'effectuer d'une manière aisée des découpes externes suivant des demi-cercles, quart de cercle, etc.

La présente invention vise à remédier à ces inconvénients en procurant une table de découpe permettant de réaliser très aisément aussi bien des découpes internes circulaires que des découpes externes circulaires et d'obtenir des pièces découpées d'une parfaite qualité de finition.

A cet effet, cette table de découpe d'une plaque de matériau suivant une forme notamment circulaire comprenant un plateau horizontal dans lequel est ménagée une ouverture, un curseur mobile dans cette ouverture, en regard d'une échelle graduée, ce curseur portant un organe définissant le centre de la pièce à découper suivant un cercle, et une lame de scie disposée à une extrémité de l'ouverture longitudinale, perpendiculairement à l'axe de cette ouverture et s'étendant verticalement au-dessus du plateau, est caractérisée en ce que cette lame de scie fait partie d'une scie sauteuse dont le corps est situé sous le plateau et le bord coupant de cette lame est décalé en avant par rapport à l'axe de l'ouverture longitudinale.

Cette disposition permet de découper aussi bien des pièces de forme circulaire que des ouvertures circulaires dans une plaque, avec une parfaite finition de la découpe.

Suivant une caractéristique complémentaire de l'invention, la lame de la scie sauteuse est logée dans l'une de plusieurs encoches radiales prévues dans la périphérie d'un manchon de guidage cylindrique fixé au corps de la scie sauteuse. De ce fait, la lame de la scie sauteuse est maintenue sur une partie importante de sa longueur, par les parois latérales de l'encoche dans laquelle elle se trouve, ce qui contribue à obtenir une excellente découpe.

Le curseur monté à coulissement longitudinal sur le plateau est pourvu de trous ou logements dans lesquels peuvent être placées des pièces auxiliaires définissant le centre des pièces devant être découpées et qui sont adaptés aux diverses opérations effectuées.

La table de découpe suivant l'invention permet de gagner un temps important pour la découpe de pièces circulaires. Par exemple, la table de découpe suivant l'invention permet de découper, dans une plaque de contre-plaqué de 19 mm d'épaisseur, un rond de 1,20 m de diamètre en environ 2min 30 s, avec une parfaite finition, alors que la même opération de découpe à la main avec une scie sauteuse, en suivant un tracé préalable sur la plaque, peut prendre près d'une heure. Par ailleurs, il est possible de découper un rond de 30 cm de diamètre en 22 secondes.

En outre, la table offre l'avantage de présenter une très grande simplicité de mise en oeuvre pour la découpe des pièces, quelle que soit la forme désirée pour celle-ci.

La prévision du manchon de guidage de la lame de scie permet d'obtenir une usure moins rapide des lames du fait qu'elles sont parfaitement guidées. On peut découper, avec la table suivant l'invention, des plaques en matériaux divers, en bois, en matière plastique, en aluminium, des plaques pleines ou ajourées telles que des plaques de grillage. On peut également effectuer un découpage en spirale.

On décrira ci-après à titre d'exemple non limitatif, une forme d'exécution de la présente invention en référence au dessin annexé sur lequel :

La figure 1 est une vue en plan d'une table de découpe suivant l'invention ;

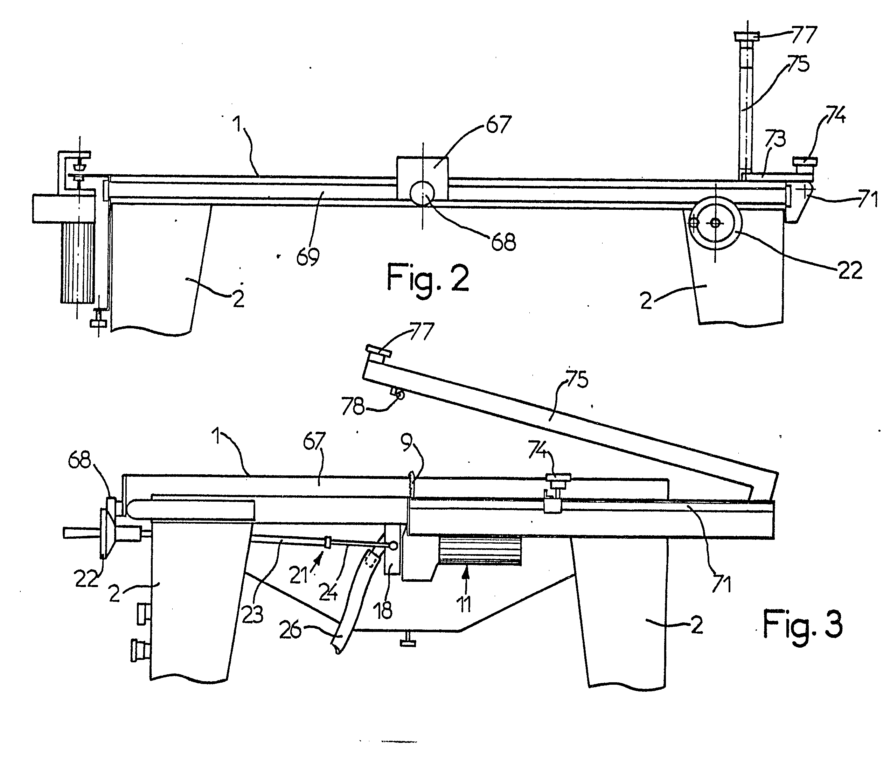

La figure 2 est une vue en élévation de la partie supérieure de la table, prise d'un côté longitudinal;

La figure 3 est une vue en élévation de la table, prise d'un côté transversal ;

La figure 4 est une vue en coupe verticale partielle, illustrant le dispositif de montage de la scie sauteuse;

La figure 5 est une vue en plan partielle, à plus grande échelle, du manchon de guidage de la lame de la scie sauteuse;

La figure 6 est une vue en coupe verticale partielle faite suivant la ligne VI-VI de la figure 5.

La figure 7 est une vue en coupe verticale faite suivant la ligne VII-VII de la figure 5 ;

La figure 8 est une vue en coupe verticale et longitudinale, à plus grande échelle, du curseur portant une pièce auxiliaire ;

La figure 9 est une vue en coupe verticale partielle du curseur portant un axe terminé par une pointe ;

Les figures 10 et 11 sont des vues en élévation de deux pièces auxiliaires terminées par des pointes ;

La figure 12 est une vue en plan d'une pièce auxiliaire destinée à une découpe suivant un demi rond ;

La figure 13 est une vue en coupe verticale faite suivant la ligne XIII-XIII de la figure 12 ;

La figure 14 est une vue en plan d'une pièce auxiliaire prévue pour la découpe d'une pièce en quart de rond ;

La figure 15 est une vue en coupe verticale faite suivant la ligne XV-XV de la figure 14 ;

La figure 16 est une vue en plan d'une pièce auxiliaire destinée à la découpe d'une plaque circulaire dans laquelle une pointe ne peut pas être enfoncée ;

La figure 17 est une vue en élévation de la pièce auxiliaire de la figure 16 ;

La figure 18 est une vue en perspective d'un outil destiné à percer un avant-trou dans une plaque dans laquelle une ouverture circulaire doit être découpée.

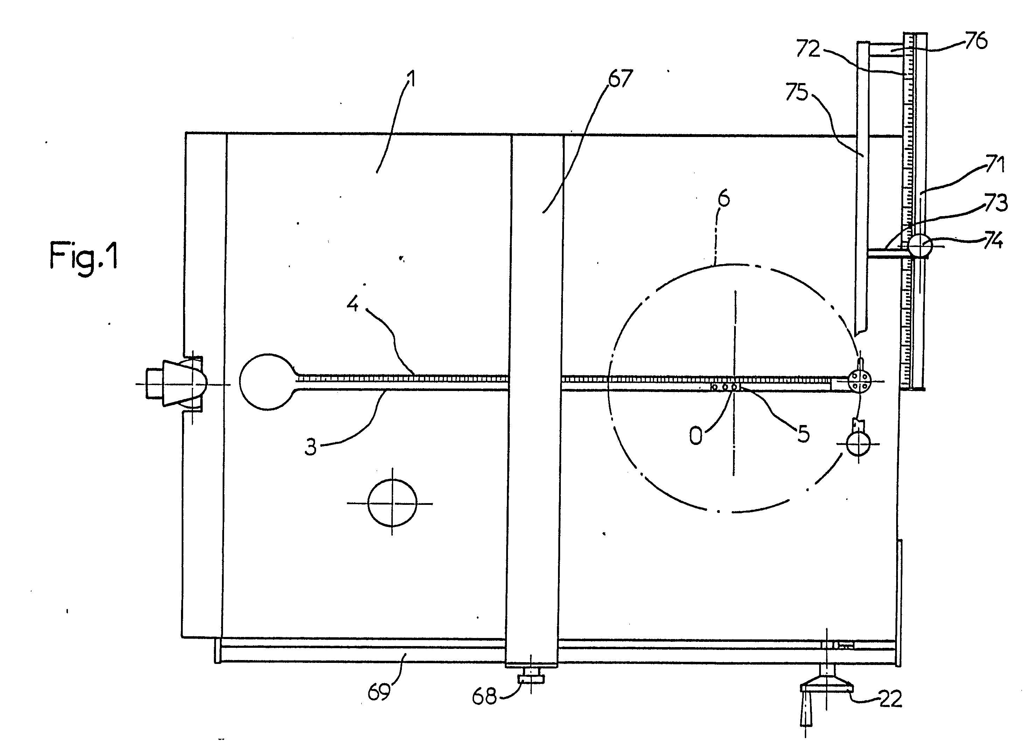

La table de découpe suivant l'invention représentée sur le dessin comprend un plateau horizontal supérieur 1 reposant sur des pieds 2 et dans lequel est découpée une ouverture longitudinale 3 le long de laquelle s'étend une échelle graduée 4. Dans cette ouverture est monté à coulissement un curseur 5 destiné à porter une pointe matérialisant le centre O d'une pièce 6 à découper suivant un cercle, telle que celle représentée en trait mixte sur la figure 1.

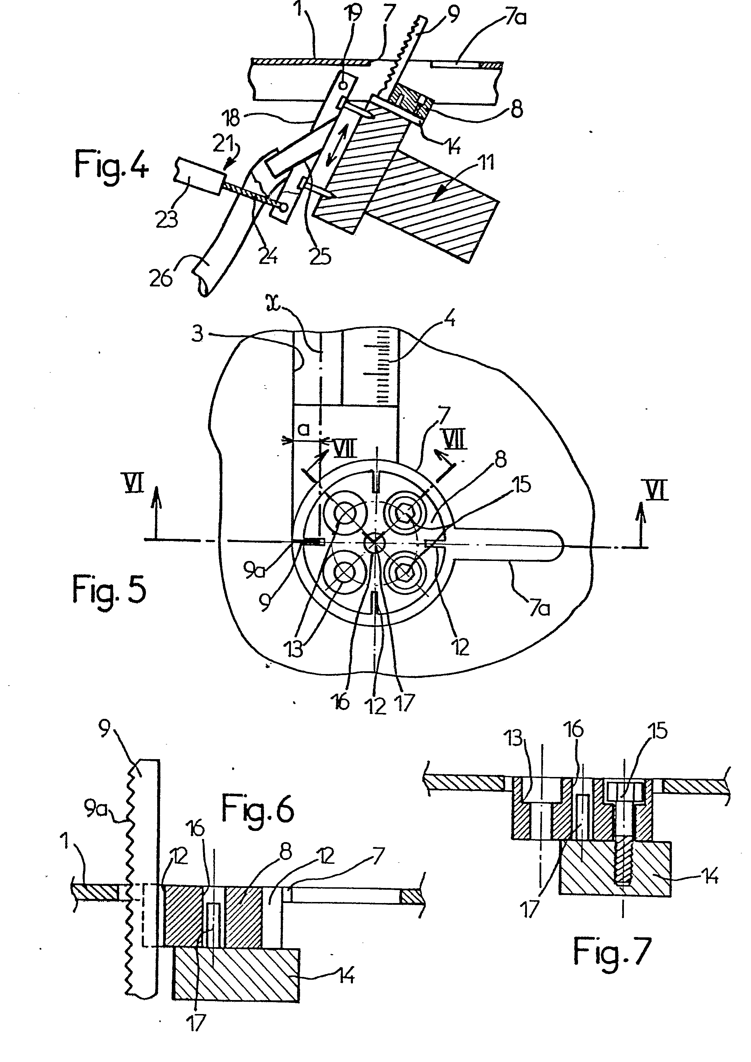

A l'une de ses extrémités, l'ouverture longitudinale 3 débouche dans une ouverture circulaire 7 (figure 5) dans laquelle se trouve un manchon de guidage 8 pour une lame verticale 9 d'une scie sauteuse 11 disposée sous le plateau 1. Le manchon de guidage de forme cylindrique comporte plusieurs encoches radiales 12 réparties régulièrement autour de l'axe du manchon, ces encoches étant au nombre de quatre dans l'exemple non limitatif illustré, distantes l'une de l'autre de 90°, ces encoches débouchant dans la surface périphérique du manchon 8.

La lame 9 de la scie sauteuse 11 est disposée de manière que son bord denté 9a soit décalé en avant par rapport à l'axe x de l'ouverture longitudinale 3 d'une distance a qui est avantageusement de l'ordre de 5 mm (largeur de la lame) si bien que l'axe x rencontre le dos de la lame. Cette disposition est essentielle pour permettre d'obtenir une coupe parfaite de la pièce circulaire 6.

Le manchon de guidage 8 est par ailleurs percé de quatre trous longitu-dinaux épaulés 13 répartis dans les secteurs délimités entre les encoches radiales 12 et par conséquent à 90° les uns des autres. Deux de ces trous servent en permanence à la fixation du manchon de guidage 8 sur un support sous-jacent 14 solidaire du support de la scie sauteuse 11. Comme on peut le voir sur la figure 7, la fixation du manchon de guidage 8 est assurée par deux vis 15 qui sont vissées dans deux trous taraudés ménagés dans le support 14. Les deux autres trous 13 sont situés dans une partie du manchon 8 qui est en porte-à-faux par rapport au support sous-jacent 14 et ces trous restent libres. Ils servent à l'aspiration vers le bas des copeaux formés pendant le découpage comme on le verra plus loin.

Dans sa partie centrale, le manchon de guidage 8 est percé de part en part d'un trou axial 16 dans lequel s'engage un ergot de mise en position 17 solidaire du support 14.

Le corps de la scie sauteuse 11 dont sont solidaires le support 14 et le manchon de guidage 8, est fixé d'une manière réglable en hauteur, à une plaque 18 disposée sous le plateau 1 et qui est monté à pivotement, à sa partie supérieure, autour d'un axe horizontal 19. Cette plaque pivotante 18 est accouplée, à sa partie inférieure, à un ensemble de commande télescopique 21 relié à un volant de manoeuvre externe 22. Le dispositif de commande 21 peut comprendre par exemple un manchon taraudé 23 solidaire du volant 22 et dans lequel est vissée une tige filetée 24 articulée à son extrémité à la partie inférieure de la plaque pivotante 18. Par conséquent, en faisant tourner le volant 22 on peut faire pivoter la plaque 18 dans le sens des aiguilles d'une montre sur la figure 4 et escamoter la lame 9 de la scie sauteuse 11 sous la table, cette lame passant à travers une encoche allongée 7a prolongeant l'ouverture circulaire 7.

La plaque pivotante 18 porte par ailleurs un tube 25 incliné vers le bas et qui débouche un peu en dessous des trous 13 du manchon de guidage 8 qui sont disposés un peu en arrière de la lame de scie 9 et qui ne sont pas traversés par les vis de fixation 15. Ce tube 25 est relié par ailleurs à un tuyau flexible 26 connecté à un aspirateur. Par conséquent, au cours d'une opération de découpe, le tube 25 permet d'aspirer, à travers les trous 13 libres, les copeaux formés.

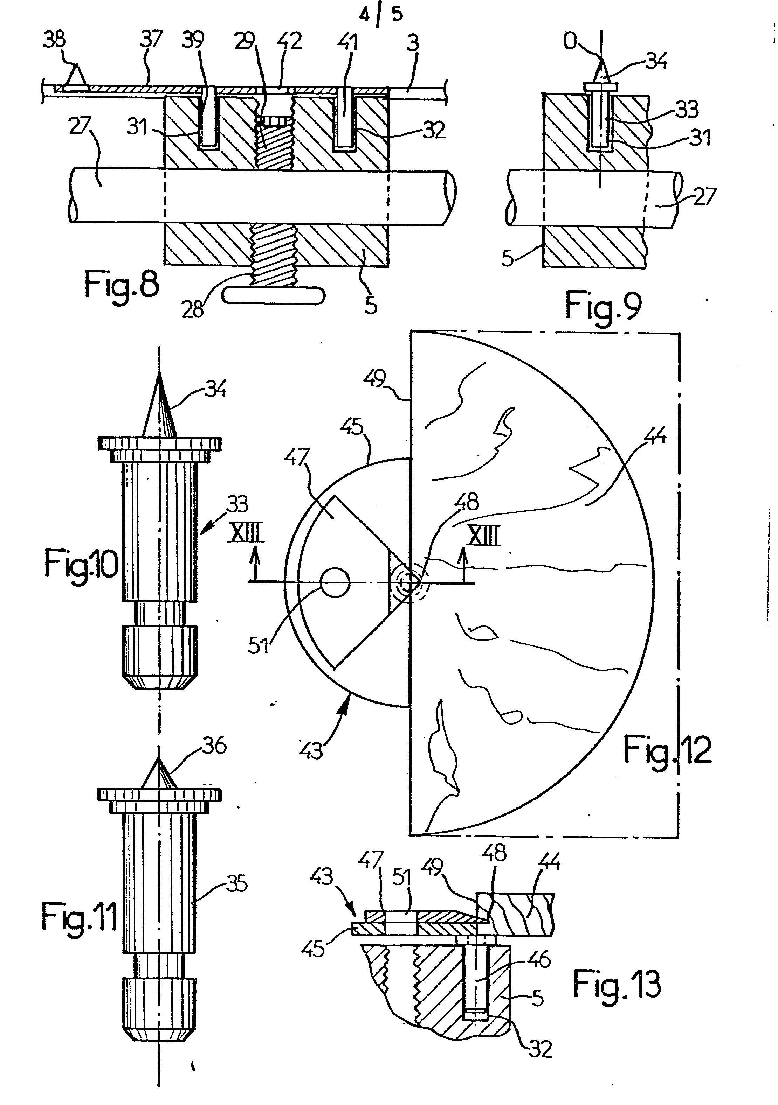

Le curseur 5 qui sert à déterminer la position du centre 0 de la pièce à découper est monté à coulissement longitudinal sur une barre 27 (figure 8) s'étendant sous l'ouverture longitudinale 3. Le curseur 5 peut être bloqué sur cette barre 27 par une vis transversale inférieure 28 et par une vis transversale supérieure 29. Ces deux vis sont vissées dans des trous taraudés débouchant dans un alésage central traversé par la barre 27.

Par ailleurs, le curseur 5 présente, dans sa partie supérieure, deux trous verticaux 31 et 32 débouchant dans la face supérieure du curseur 5. Ces trous sont destinés à recevoir diverses pièces auxiliaires servant à définir le centre des pièces à découper. Sur la figure 10 est représentée une telle pièce auxiliaire 33 constituée par un axe épaulé terminé à sa partie supérieure par une pointe conique 34 destinée à s'enfoncer dans la matière devant être découpée. La pièce auxiliaire 33 est destinée à déterminer le centre de la pièce découpée lorsque cette dernière à une dureté relativement faible, par exemple si la pièce est en bois normal ou aggloméré, ou encore en grillage. Cet axe épaulé 33 est engagé dans l'un des trous 31 et 32 du curseur 5 (figure 9) et sa pointe 34 détermine alors le centre O de la pièce découpée suivant un cercle.

La figure 11 représente une autre pièce auxiliaire 35 constituée par un axe épaulé présentant à son extrémité une pointe 36 de plus petite hauteur que la pointe 34. La pièce auxiliaire 35 constitue un axe pour le découpage de plaques en matériau plus dur.

Sur la figure 8 est représentée une pièce auxiliaire 37 qui est constituée par une plaquette rectangulaire portant, à l'une de ses extrémités, une pointe de centrage 38. Cette plaquette 37 est solidaire par ailleurs de deux ergots parallèles 39 et 41, perpendiculaires à la plaque et qui sont destinés à s'engager respectivement dans les deux trous 31 et 32, pour assurer l'immobilisation de la plaquette 37. Celle-ci est également percée, entre les ergots 39 et 41, d'un trou 42 qui se trouve au droit du trou taraudé dans lequel est vissée la vis de blocage 29 du curseur 5. Ce trou 42 permet ainsi d'avoir accès à la vis 29, pour la débloquer ou la bloquer, en vue de déplacer le curseur 5 sans avoir à retirer la plaquette auxiliaire 37.

Cette plaquette 37 permet de découper des pièces de petits diamètres, en rapprochant la pointe 38, définissant le centre O de la pièce circulaire découpée, de la lame 9 de la scie sauteuse, étant donné que le curseur 5 ne peut pas être amené tout contre la lame 9.

Les figures 12 et 13 illustrent une pièce auxiliaire 43 utilisée pour découper des pièces 44 en forme de demi-ronds. La pièce 43 comprend une plaquette inférieure 45 en forme de demi cercle et qui est solidaire, en son centre, d'un ergot 46 s'engageant dans le trou 32 du curseur 5. Sur la plaquette semi-circulaire 45 est fixée une autre plaquette supérieure 47 en forme de quart de cercle dont la pointe 48 fait saillie au-delà de la face diamétrale de la plaquette inférieure 45 et constitue une pointe s'engageant dans le chant

49 de la pièce à découper 44 devant constituer le diamètre de cette pièce une fois découpée en demi-rond.

Par ailleurs, on peut noter que les deux plaquettes inférieure 45 et supérieure 47 sont percées de trous en regard 51 prévus sur un rayon perpendiculaire à la face diamétrale de la plaquette 45, ces trous 51 étant destinés à venir se placer, à un certain moment au cours de la rotation de la pièce 43, au-dessus du trou taraudé du curseur 5 dans lequel est logée la vis de blocage 29. Ceci permet, en introduisant un tournevis à travers les trous 51, de débloquer la vis 29 et par conséquent le curseur 5, sans lâcher la plaque en cours de découpage.

Pour assurer la liaison entre la pièce auxiliaire 43 et la plaque devant être découpée en demi-rond, on applique cette dernière contre le chant diamétral de la plaquette inférieure 45 et on donne un coup de marteau sur la plaque pour enfoncer la pointe 48 dans le chant 49 de cette plaque.

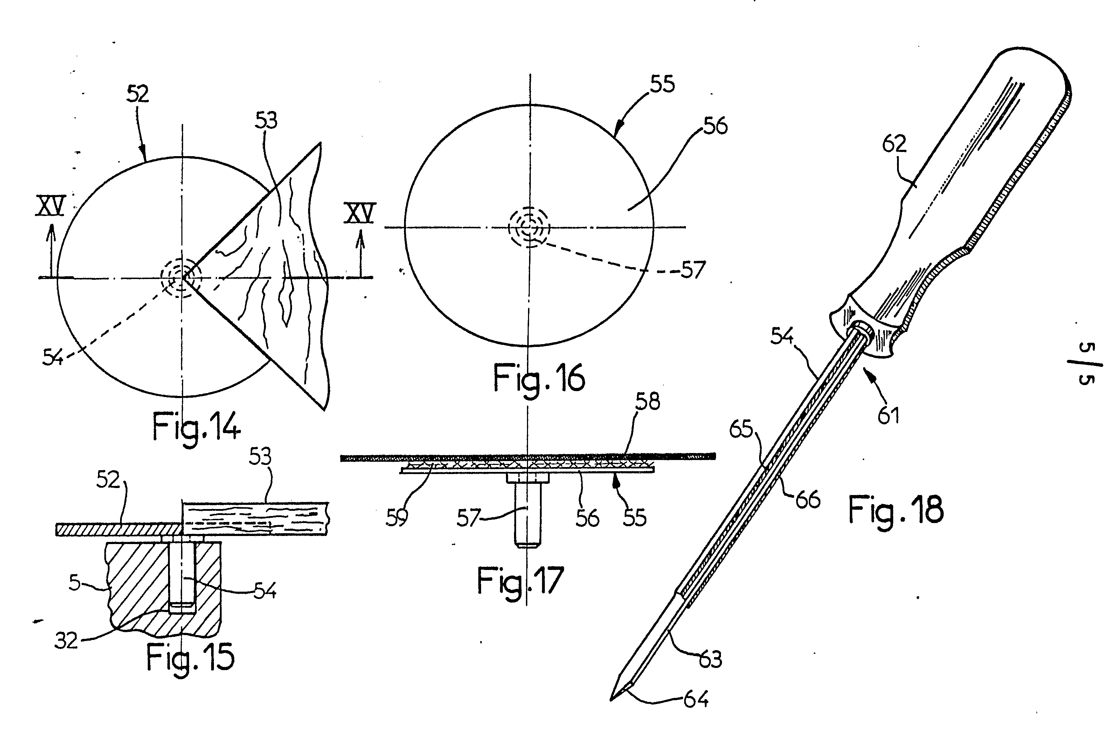

Les figures 14 et 15 illustrent une pièce auxiliaire 52 utilisée pour effectuer une découpe suivant un quart de rond. Cette pièce 52 est constituée par une portion de disque s'étendant sur un arc de 270° de manière à définir un angle rentrant de 90° dans lequel est engagé l'angle droit d'une pièce 53 devant être découpée. La pièce auxiliaire 52 est solidaire en son centre d'un ergot 54 qui est logé dans le trou 32 du curseur 5 et qui définit l'axe vertical de rotation de la pièce auxiliaire 52 et de la pièce 53 à découper.

Les figures 16 et 17 illustrent une pièce auxiliaire 55 qui est utilisée pour déterminer le centre d'une pièce devant être découpée suivant un cercle et qui est en un matériau ne pouvant pas être perforé, par exemple une matière plastique très dure qui ne doit pas être abimée. La pièce auxiliaire 55 est constituée par un disque 56 solidaire en son centre d'un ergot 57 s'étendant perpendiculairement. Cet ergot 57 est destiné à constituer l'axe de rotation de la pièce auxiliaire 55 en étant engagé dans le trou 32 du curseur 5. Une pièce à découper 58 en matière dure est alors fixée à la pièce auxiliaire 55 au moyen d'une couche de colle 59 ne laissant pas de trace.

La figure 18 illustre un outil manuel 61 qui est utilisé pour percer, dans une plaque dans laquelle doit être découpée une ouverture circulaire, un avant-trou permettant le passage de la lame de scie 9 avant le début de l'opération de découpe proprement dite. Cet outil 61 comprend une poignée 62 et une tige qui est composée d'une lame rectangulaire 63 de même épaisseur que la lame de scie 9 et qui est terminée par une pointe 64. Cette lame 63 est renforcée, sur la plus grande partie de sa longueur en partant de la poignée 62, par deux lames 65 et 66 accolées à la précédente.

L'équipement de la table de découpe suivant l'invention est complété par un guide de découpe rectiligne 67, s'étendant transversalement au-dessus du plateau 1 et monté à coulissement longitu

dinal sur la table, c'est-à-dire dans la direction de l'ouverture longitudinale 3 et qui peut être bloqué dans toute position appropriée au moyen d'une vis 68, immobilisant le guide sur une glissière longitudinale 69 s'étendant le long d'un bord longitudinal de la table.

Par ailleurs, la table de découpe comporte, le long de son bord transversal proche de la lame de scie 9, une glissière transversale 71 le long de laquelle s'étend une échelle graduée 72 et sur laquelle est montée à coulissement une butée 73 . Cette butée peut être bloquée en position au moyen d'une vis 74 et elle peut pivoter autour de la glissière à section circulaire 71.

Au-dessus de la table 1 et à proximité de la lame 9 s'étend un presseur 75 qui est constitué par une barre articulée, à l'une de ses extrémités, autour d'un axe longitudinal 76 fixé à l'extrémité de la glissière 71 . Ce presseur 75 comporte, à son extrémité mobile, une poignée supérieure 77 et un galet roulant inférieur 78 , lequel est destiné à prendre appui sur la face supérieure d'une plaque pendant l'opération de découpage.

La table de découpe suivant l'invention permet de découper, à partir de plaques en divers matériaux, des pièces circulaires ou des ouvertures circulaires dans ces plaques ou encore des pièces partiellement circulaires comme on l'a vu précédemment. En fonction du rayon souhaité, on place le curseur 5 dans une position telle que son trou 32 définissant l'axe de rotation soit situé en regard du repère approprié de l'échelle graduée 4. Après quoi, on bloque le curseur 5 sur la glissière 27 au moyen de la vis de blocage 29. On place sur le curseur 5 la pièce auxiliaire appropriée à la nature du travail désiré. Cette pièce auxiliaire est l'une de celles décrites et illustrées sur les figures 8 à 17. Ensuite on place la plaque à découper sur le plateau 1 en exerçant une pression sur cette plaque de manière que l'une des pointes 34 et 36, dans la mesure où l'on utilise l'un des axes 33 et 35, pénètre dans la face inférieure de la plaque à découper, pour matérialiser le centre de rotation 0. Après avoir mis en marche la scie sauteuse 11, on fait alors tourner la plaque à découper en la maintenant appliquée sur le plateau 1 et on obtient une découpe circulaire parfaite. Pendant cette rotation, on peut utiliser le presseur 75 pour mieux maintenir la plaque : on exerce alors une pression sur le presseur 75 de manière que son galet 78 roule sur la face supérieure de la plaque qui est en train d'être découpée circulairement.

REVENDICATIONS
-------------------------------

1. Table de découpe d'une plaque de matériau suivant une forme notamment circulaire comprenant un plateau horizontal dans lequel est ménagée une ouverture, un curseur mobile dans cette ouverture, en regard d'une échelle graduée, ce curseur portant un organe définissant le centre de la pièce à découper suivant un cercle, et une lame de scie disposée à une extrémité de l'ouverture longitudinale, perpendiculairement à l'axe de cette ouverture et s'étendant verticalement au-dessus du plateau, caractérisée en ce que cette lame de scie (9) fait partie d'une scie sauteuse dont le corps (11) est situé sous le plateau (1) et le bord coupant (9a) de cette lame (9) est décalé en avant par rapport à l'axe (x) de l'ouverture longitudinale (3).

2. Table de découpe suivant la revendication 1, caractérisée en ce que le bord coupant (9a) de la lame de scie (9) est décalé d'une distance sensiblement égale à la largeur de la lame si bien que l'axe (x) de l'ouverture longitudinale (3) rencontre le dos de la lame.

3. Table de découpe suivant l'une quelconque des revendications 1 et 2, caractérisée en ce qu'à l'une de ses extrémités l'ouverture longitudinale (3) débouche dans une ouverture circulaire (7) dans laquelle se trouve un manchon de guidage (8) pour la lame verticale (9) de la scie sauteuse, ce manchon de guidage (8), de forme cylindrique, comportant plusieurs encoches radiales (12) réparties régulièrement autour de l'axe du manchon et débouchant dans la surface périphérique de celui-ci, la lame (9) étant logée dans une encoche (12)

4. Table de découpe suivant la revendication 3, caractérisée en ce que le manchon de guidage est percé de part en part de trous longitudinaux (13) dans les secteurs délimités entre les encoches radiales et des vis de fixation (15) traversent certains des trous (13) du manchon et sont vissées dans un support (14) solidaire du corps de la scie sauteuse (11), les trous restant (13) du manchon restant libres.

5. Table de découpe suivant les revendications 1 à 4, caractérisée en ce que le corps de la scie sauteuse (11) est fixé, d'une manière réglable en hauteur, à une plaque (18) disposée sous le plateau (1) et qui est montée à pivotement à sa partie supérieure, autour d'un axe horizontal (19), cette plaque pivotante (18) étant accouplée, à sa partie inférieure, à un ensemble de commande télescopique (21) relié à un volant de manoeuvre externe (22) commandant le pivotement de la plaque, pour escamoter la lame (9) de la scie sauteuse sous la table.

6. Table de découpe suivant la revendication 5, caractérisée en ce que la plaque pivotante (18) porte un tube (25) incliné et relié par un tuyau flexible (26) à un aspirateur.

7. Table de découpe suivant l'une quelconque des revendications 1 à 5, caractérisée en ce que le curseur (5) est monté à coulissement longitudinal sur une barre (27) s'étendant sous l'ouverture longitudinale (3), il porte au moins une vis de blocage transversale supérieure (29) vissée dans un trou taraudé débouchant dans un alésage central traversé par la barre (27) et il présente, dans sa partie supérieure, deux trous verticaux (31) et (32) débouchant dans la face supérieure du curseur (5) et destinés à recevoir des pièces auxiliaires servant à définir le centre des pièces à découper.

8. Table de découpe suivant la revendication 7, caractérisée en ce que la pièce auxiliaire (33, 35) est constituée par un axe épaulé terminé par une pointe conique (34,36).

9. Table de découpe suivant la revendication 7, caractérisée en ce que la pièce auxiliaire (37) est constituée par une plaquette rectangulaire portant, à l'une de ses extrémités, une pointe de centrage (38) et solidaire de deux ergots parallèles (39,41) perpendiculaires à la plaque, destinés à s'engager respectivement dans les deux trous (31, 32) du curseur (5), la plaquette (37) étant percée, entre les ergots (39 et 41),d'un trou (42) se trouvant au droit du trou taraudé dans lequel est vissée la vis de blocage (29) du curseur (25).

10. Table de découpe suivant la revendication 7, caractérisée en ce que la pièce auxiliaire (43) , utilisée pour découper des pièces (44) en forme de demi-ronds, comprend une plaquette inférieure (45) en forme de demi-cercle et qui est solidaire, en son centre, d'un ergot (46) s'engageant dans le trou (32) du curseur (5), cette pièce auxiliaire (43) présentant en son centre une pointe (48) faisant saillie au-delà de la face diamétrale de la plaquette inférieure (45) et s'engageant dans le chant (49) de la pièce (44) découpée en forme de demi-rond , la plaquette inférieure (45) étant percée d'un trou (51) destiné à venir se placer, à un certain moment au cours de la rotation de la pièce auxiliaire (43) ,au-dessus du trou taraudé du curseur (5) dans lequel est logée la vis de blocage (29).

11. Table de découpe suivant la revendication 10, caractérisée en ce que la pointe (48) est celle d'une plaquette supérieure (47) en forme de quart de cercle , laquelle est fixée sur la plaquette inférieure semi-circulaire (45) de manière que sa pointe (48) fasse saillie au-delà de la face diamétrale de la plaquette inférieure (45), cette plaquette supérieure (45) étant percée de trou (51) situé au-dessus du trou (51) de la plaquette inférieure (45).

12. Table de découpe suivant la revendication 7, caractérisée en ce que la pièce auxiliaire (52) utilisée pour effectuer une découpe suivant un quart de rond est constituée par une portion de disque s'étendant sur un arc de 270° de manière à définir un angle rentrant de 90° dans lequel est engagé l'angle droit d'une pièce (53) devant être découpée, cette pièce auxiliaire (52) étant solidaire en son centre d'un ergot (54) venant se loger dans le trou (32) du curseur (5).

13. Table de découpe suivant la revendication 7, caractérisée en ce que la pièce auxiliaire (55) est constituée par un disque (56) solidaire en son centre d'un ergot (57) s'étendant perpendiculairement et destiné à constituer l'axe de rotation de la pièce auxiliaire (55) en étant engagé dans le trou (52) du curseur (5), une pièce à découper (58) en matière dure étant fixée à la pièce auxiliaire (55) au moyen d'une couche de colle (59).

14. Table de découpe suivant l'une quelconque des revendications 1 à 13, caractérisée en ce qu'elle comporte un outil manuel (61) pour percer un avant trou permettant le passage de la lame de scie (9) avant le début d'une découpe d'une ouverture circulaire, cet outil (61) comprenant une tige composée d'une lame rectangulaire (63) de même épaisseur que la lame de scie (9) et qui est terminée par une pointe (64), cette lame (63) étant renforcée , sur la plus grande partie de sa longueur en partant de la poignée (62),par deux lames (65,66) accolées à la précédente.

15. Table de découpe suivant l'une quelconque des revendications 1 à 14, caractérisée en ce qu'elle comprend un guide de découpe rectiligne (67) s'étendant transversalement au-dessus du plateau (1) et monté à coulissement longitudinal sur la table, sur une glissière longitudinale (69) s'étendant le long d'un bord longitudinal de la table, et une vis (68) immobilisant le guide de découpe (67) sur la glissière (69).

16. Table de découpe suivant l'une quelconque des revendications 1 à 15, caractérisée en ce qu'elle comporte, le long de son bord transversal proche de la lame de scie (9), une glissière transversale (71) le long de laquelle s'étend une échelle graduée (72) et sur laquelle est montée à coulissement une butée (73) pouvant être bloquée en position au moyen d'une vis (74), cette butée (73) pouvant pivoter autour de la glissière à section circulaire (71).

17. Table de découpe suivant l'une quelconque des revendications 1 à 16, caractérisée en ce qu'au-dessus de la table (1) et à proximité de la lame de scie (9) s'étend un presseur (75) qui est constitué par une barre articulée, à l'une de ses extrémités, autour d'un axe longitudinal (76) et portant,à son extrémité mobile, un galet roulant inférieur (78) destiné à prendre appui sur la face supérieure d'une plaque pendant l'opération de découpage.

Fig.1

Fig. 2

Fig. 3

0044249

Fig.4

Fig. 5

Fig.6

Fig.7

0044249

Fig.8

Fig.9

Fig.10

Fig.11

Fig.12

Fig.13

Fig.14

Fig.16

Fig.15

Fig.17

Fig.18

5/5

0044249

Office européen
des brevets

**RAPPORT DE RECHERCHE EUROPEENNE**

EP 81 40 1091

| Catégorie | Citation du document avec indication. en cas de besoin. des parties pertinentes | Revendica-tion concernee |
|---|---|---|
| | **DOCUMENTS CONSIDERES COMME PERTINENTS** | |
| D | US - A - 4 055 102 (STUBBINGS)<br>  * Revendications 1,2,9 *<br>-- | 1 |
| | US - A - 2 394 789 (LAVOIE)<br>  * Figure 1 *<br>-- | 1 |
| | GB - A - 1 211 644 (SKODA)<br>  * Page 2, lignes 91-95, 124-130;<br>  page 3, lignes 25-29 *<br>-- | 1,2,<br>17 |
| | GB - A - 1 411 899  (LANAUZE)<br>  * Page 2, lignes 66-92 *<br>-- | 5 |
| | GB - A - 602 178 (GREEN)<br>  * Page 3, lignes 9-38, 96-110;<br>  page 4, lignes 3-61 *<br>-- | 5,7,15 |
| | DE - A - 2 718 952 (SAND)<br>  * Page 14, lignes 2-4; page 16,<br>  lignes 17-27 *<br>-- | 6,17 |
| | US - A - 2 801 652 (MEEKER)<br>  * Colonne 2, lignes 8-15; fi-<br>  gure 6 *<br>-- | 8 |
| | US - A - 2 696 230 (LIBBY)<br>  * Colonne 2, lignes 77-81; co-<br>  lonne 3, lignes 1,2,17-19 *<br>--                        ./. | 12,13 |

**CLASSEMENT DE LA DEMANDE (Int Cl )**

B 23 Q 1/14

**DOMAINES TECHNIQUES RECHERCHES (Int. Cl.³)**

B 23 Q
B 27 B
B 27 C
B 27 H

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cite pour d'autres
   raisons
&: membre de la même famille.
   document correspondant

Le present rapport de recherche a éte établi pour toutes les revendications

| Lieu de la recherche | Date d'achèvement de la recherche | Examinateur |
|---|---|---|
| La Haye | 29-10-1981 | DE GUSSEM |

OEB Form 1503.1   06.78

| Catégorie | Citation du document avec indication, en cas de besoin, des parties pertinentes | Revendication concernée | CLASSEMENT DE LA DEMANDE (Int. Cl. ³) |
|---|---|---|---|
| | US - A - 2 850 058 (STOLL)<br>* Colonne 2, lignes 20-25, 44-47 * | 16 | |
| | -- | | |
| | DE - C - 470 509 (ZIMMER)<br>* Revendication 1 * | 17 | |
| | -- | | |
| A | FR - A - 1 104 105 (COMMERGNAT) | | |
| A | GB - A - 1 233 013 (LUTZ) | | DOMAINES TECHNIQUES RECHERCHES (Int. Cl. ³) |
| A | DE - C - 963 647 (VOLKENBORN) | | |
| A | DE - C - 152 282 (SHAW) | | |
| A | US - A - 4 204 446 (KNOCHEL) | | |
| A | US - A - 4 027 566 (HARRILL) | | |
| A | US - A - 3 152 625 (BOHRER) | | |
| AD | US - A - 2 827 084 (MASSONGILL) | | |
| A | US - A - 2 611 400 (SHORE) | | |
| | ---- | | |

**DOCUMENTS CONSIDERES COMME PERTINENTS**